# EUROPEAN PATENT APPLICATION

(11) **EP 4 276 662 A1**
(43) Date of publication of application: **15.11.2023**
(21) Application number: 23170879.3
(22) Date of filing: 28.04.2023
(51) Int. Cl.: G06F 21/44, G06F 21/60

(54) **SYSTEM AND METHOD FOR TRANSMITTING DATA BETWEEN A PLURALITY OF MODULES**

(30) Priority: 12.05.2022 CN 202210514821
(71) Applicant: Beijing Tusen Zhitu Technology Co., Ltd., Beijing 100016 (CN)
(72) Inventor: JIANG, Ziyue, Beijing, 100016 (CN); JIN, Jiangming, Beijing, 100016 (CN)
(74) Representative: Murgitroyd & Company

(57) **Abstract**

The present disclosure relates to a system and a method for transmitting data between a plurality of modules. The system comprises: a first storage unit storing data to-be-transmitted between a plurality of modules; a second storage unit for storing identity information of a plurality of modules and permission information of a reading operation and/or a writing operation of the a plurality of modules on the first storage unit; and a control unit connected to the first storage unit and the second storage unit and a plurality of modules, and controlling reading operation and/or writing operation of a plurality of modules on the first storage unit according to the identity information and the permission information stored in the second storage unit. A plurality of modules transmit data by executing the writing operation and/or the reading operation on the first storage unit under the control of the control unit.

## Description

The present disclosure claims priority to Chinese patent application No. 202210514821.1, titled "SYSTEM AND METHOD FOR TRANSMITTING DATA BETWEEN A PLURALITY OF MODULES", filed on May 12, 2022.

### TECHNICAL FIELD

The present disclosure relates generally to the technical field of data communication, and more particularly to a system and method for transmitting data between a plurality of modules via shared memory.

### BACKGROUND

In autonomous (unmanned) driving technology, an autonomous driving system refers to a robot operating system that is responsible for overall planning and associating each autonomous driving sensor module, algorithm module, and control module and that is equivalent to the "nervous system" of a human driver. Security is particularly important and must be considered in the design and development of an autonomous driving system.

At present, there is a large amount of data transmission communication in an autonomous driving system, which usually uses shared memory (internal storage) as the in-process communication method. The existing methods usually use software code logic to protect shared memory, but the software code logic is easy to be broken through, so that the shared memory is easily maliciously hacked or rewritten, leading to security risks.

### SUMMARY

The present disclosure proposes a technology for transmitting data between a plurality of modules that enables the isolation of shared memory based on hardware mechanisms so as to ensure the security of the shared memory in a combination of hardware and software.

The following presents a simplified summary of the present disclosure in order to provide a basic understanding of some aspects of the present disclosure. It should be understood that this summary is not an exhaustive overview of the present disclosure, and is intended neither to determine key or critical parts of the present disclosure nor to define the scope of the present disclosure. Its sole purpose is to present some concepts in a simplified form as a prelude to the more detailed description that is discussed later.

According to one aspect of the present disclosure, there is provided a system for transmitting data between a plurality of modules, including: a first storage unit configured to store data to-be-transmitted between the plurality of modules; a second storage unit configured to store identity information of the a plurality of modules and permission information of a reading operation and/or a writing operation of the plurality of modules on the first storage unit; and a control unit connected to the first storage unit and the second storage unit and the plurality of modules and configured to control reading operation and/or writing operation of the plurality of modules on the first storage unit according to identity information and permission information stored in the second storage unit, wherein the plurality of modules transmit data by executing writing operation and/or reading operation on the first storage unit under the control of the control unit.

According to another aspect of the present disclosure, there is provided a method for transmitting data between a plurality of modules, including: a first module of the plurality of modules sending a writing request to write data into a first storage unit, wherein the first storage unit is configured for storing data to-be-transmitted between the plurality of modules; verifying an identity of the first module according to identity information of the first module stored in a second storage unit, and determining whether to allow the first module to execute a writing operation on the first storage unit according to permission information of the first module stored in the second storage unit, wherein the second storage unit is configured for storing identity information of a plurality of modules and permission information of a reading operation and/or a writing operation of the plurality of modules on the first storage unit; in response to the first module being allowed to execute writing operation on the first storage unit and there being no other modules that are executing writing operation on the first storage unit, the first module writing data to the first storage unit, and a second module of the plurality of modules reading the data written by the first module from the first storage unit.

According to another aspect of the present disclosure, there is provided a computer program enabling the above-described method for transmitting data between a plurality of modules. Furthermore, a computer program product in the form of at least a computer-readable medium having a computer program code recorded thereon for implementing the above-described method for transmitting data between a plurality of modules is provided.

According to another aspect of the present disclosure, there is provided an electronic device comprising a processor and a memory having a program stored thereon. The program, when executed by the processor, causes the processor to execute the above-described method for transmitting data between a plurality of modules.

According to another aspect of the present disclosure, there is provided an autonomous driving system including at least a lidar module or a radar module, a camera module, a driving speed control module, a driving direction control module, and a path decision module, wherein the lidar module, the camera module, the driving speed control module, the driving direction control module, and the path decision module communicate by using the above-described method for transmitting data between a plurality of modules.

According to the technology disclosed in the present disclosure for transmitting data between a plurality of modules, the security of shared memory configured for, for example, an autonomous driving system is protected by combining software and hardware. That is, on the basis of the traditional isolation of reading operation and writing operation through software logic, the security of writing into a shared memory is further ensured through a hardware mechanism so as to prevent key data in the shared memory from being tampered with, thereby improving the security of data transmission.

### BRIEF DESCRIPTION OF THE DRAWINGS

The above and other objects, features, and advantages of the present disclosure will be more readily understood by reference to the following description of the implementation modes of the present disclosure taken in conjunction with the accompanying drawings. In the drawings:
Fig. 1 shows a block diagram illustrating a configuration of a system for transmitting data between a plurality of modules according to an implementation mode of the present disclosure;
Fig. 2 shows a schematic diagram illustrating an example of an operation of a system for transmitting data between a plurality of modules according to an implementation mode of the present disclosure;
Fig. 3 shows a flowchart illustrating a method for transmitting data between a plurality of modules according to an implementation mode of the present disclosure;
Fig. 4 shows a flowchart illustrating an example of a method for reading shared memory according to an implementation mode of the present disclosure;
Fig. 5 is a flowchart illustrating an example of a method for writing into shared memory according to an implementation mode of the present disclosure;
Fig. 6 is a simplified structural diagram illustrating a general-purpose machine that may be used to implement a system and a method for transmitting data between a plurality of modules according to an implementation mode of the present disclosure.
Fig. 7 is a structural diagram of a computing device 700 according to an embodiment of the present disclosure.

### DETAILED DESCRIPTION

Hereinafter, some implementation modes of the present disclosure will be described in detail with reference to the accompanying illustrative drawings. When using a reference numeral to indicate an element of a drawing, although the same elements are shown in different drawings, the same elements will be represented by the same reference numerals. Further, in the following description of the present disclosure, a detailed description of known functions and configurations incorporated herein will be omitted when it may make the subject matter of the present disclosure unclear.

The terminology used herein is for the purpose of describing particular implementation modes only and is not intended to limit the disclosure. As used herein, unless the context otherwise indicates, the singular form is intended to include the plural form as well. It will be further understood that the terms "comprises", "includes", and "has" when used in this description are taken to specify the presence of stated features, entities, operations, and/or components, but do not preclude the presence or addition of one or more other features, entities, operations, and/or components.

Unless otherwise limited, all terms used herein, including technical and scientific terms, have the same meanings as those commonly understood by those skilled in the art to which the inventive concept belongs. It will be further understood that terms such as those defined in commonly used dictionaries should be interpreted as having meanings consistent with their meanings in the context of the relevant field, and should not be interpreted in an idealized or overly formal sense unless explicitly defined herein.

In the following description, numerous specific details are set forth in order to provide a thorough understanding of the present disclosure. The present disclosure may be practiced without some or all of these specific details. In other instances, to avoid obscuring the disclosure by unnecessary details, only components closely related to the solution according to the present disclosure are shown in the drawings, while other details that are not relevant to the present disclosure are omitted.

Hereinafter, the technology for transmitting data between a plurality of modules of the present disclosure will be described in detail with reference to the accompanying drawings in conjunction with implementation modes according to the present disclosure.

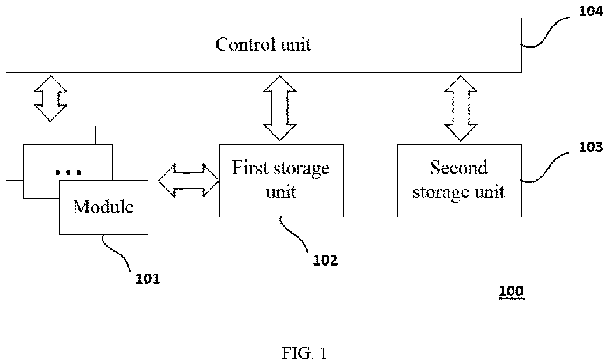

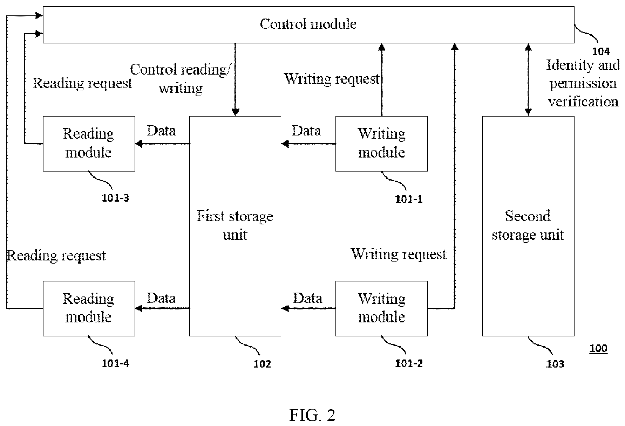

Fig. 1 shows a block diagram illustrating a configuration of a system 100 for transmitting data between a plurality of modules according to an implementation mode of the present disclosure. Fig. 2 shows a schematic diagram illustrating an example of an operation of a system 100 for transmitting data between a plurality of modules according to an implementation mode of the present disclosure.

According to an implementation mode of the present disclosure, a system 100 for transmitting data between a plurality of modules 101 may include:
a first storage unit 102 configured to store data transmitted or to-be-transmitted between a plurality of modules 101;
a second storage unit 103 configured to store identity information of a plurality of modules 101 and permission information of reading operation and/or writing operation of a plurality of modules 101 to the first storage unit 102; and
a control unit 104 communicationally connected with the first storage unit 102 and the second storage unit 103 and the plurality of modules 101, and configured to control a reading operation and/or a writing operation of the plurality of modules 101 to the first storage unit 102 according to the identity information and the permission information stored in the second storage unit 103,
wherein the plurality of modules 101 transmit data by executing a writing operation and/or a reading operation on the first storage unit 102 under the control of the control unit 104.

Each of the components of system 100 is described in greater detail below in conjunction with Fig. 2.

According to an implementation mode of the present disclosure, the system 100 may be an autonomous driving system. Further, according to an implementation mode of the present disclosure, the system 100 is an autonomous driving system applicable to, for example, ground transportation, water surface or underwater vehicles, aircraft, or spacecraft.

Further, according to an implementation mode of the present disclosure, the plurality of modules 101 may include module 101-1, module 101-2, module 101-3, and module 101-4. Each of the modules 101-1 to 101-4 may be a lidar module, a camera module, a driving speed control module, a driving direction control module, or a path decision module. Here, those skilled in the art should realize that an autonomous driving system may include a plurality of modules, such as a sensor module, multiple location modules, multiple decision modules, and multiple control modules, the plurality of modules including but not limited to a lidar module, a camera module, a GPS module, an IMU module, a wheel speedometer module, a GNSS module, a path decision module, a driving speed control module, a driving direction control module, etc. Although only four modules are shown herein for the convenience of description, the present disclosure is not limited thereto and the plurality of modules 101 may be any multiple modules in an autonomous driving system. The number of modules may be more or less depending on the specific application scenario.

According to the implementation modes of the present disclosure, each of the plurality of modules 101-1 to 101-4 may be a software module, a hardware module, or a firmware module. For example, each of the plurality of modules 101-1 to 101-4 may be a process or a thread executed by a CPU implemented on a computer.

According to an implementation mode of the present disclosure, the first storage unit 102 may store data to-be-transmitted between the plurality of modules 101-1 to 101-4. In other words, the first storage unit 102 may be a memory shared by a plurality of modules 101-1 to 101-4. Therefore, in this document, the terms "first storage unit" and "shared memory" have the same meaning and are therefore used herein as equivalents. For example, the first storage unit 102 may be implemented as a volatile memory or a non-volatile memory. In particular, where each of the plurality of modules 101-1 to 101-4 is implemented as a process or a thread executed by a central processing unit (CPU) in a computer, the first storage unit 102 may be an internal storage of the computer accessed by the process or thread.

The thread described herein is a conceptual thread of the CPU. A thread at the CPU level is the physical unit actually executed by the CPU. The processes described herein are multiple special threads that share the same context resources, and threads of different processes are threads that do not share the context resources. Therefore, a thread can be viewed as the smallest unit (granularity) in the CPU execution stream. In contrast, a process may be understood as a set of threads that are assigned certain shared attributes. Since the concepts of threads and processes are known to those skilled in the art, their details are not described in greater detail herein for the sake of brevity.

According to an implementation mode of the present disclosure, the plurality of modules 101-1 to 101-4 can transmit data to each other through the first storage unit 102 as shared memory. For example, as shown in Fig. 2, module 101-1 and module 101-2 may be writing modules, also referred to herein as "first module" or "third module", that execute writing operations on the first storage unit 102, while module 101-3 and module 101-4 may be reading modules, also referred to herein as "second module", that execute reading operations on the first storage unit 102. As shown in Fig. 2, taking a writing module 101-1 and a reading module 101-3 as an example, the data can be transmitted from the writing module 101-1 to the reading module 101-3 by writing the data to the first storage unit 102 through the writing module 101-1, and then the reading module 101-3 reading the data written to the first storage unit 102 by the writing module 101-1 from the first storage unit 102. Those skilled in the art should recognize that although an implementation mode of the present disclosure is described herein with module 101-1 and module 101-2 being writing modules that execute writing operations on the first storage unit 102 and module 101-3 and module 101-4 being reading modules that execute reading operations on the first storage unit 102 as examples, the present disclosure is not limited thereto. In fact, each of the plurality of modules 101-1 to 101-4 may execute a reading operation and/or a writing operation on the first storage unit 102, depending on the application scenario.

According to an implementation mode of the present disclosure, the second storage unit 103 may store the identity information of each of the plurality of modules 101-1 to 101-4 and permission information of a reading operation and/or a writing operation of each of the plurality of modules 101-1 to 101-4 to the first storage unit 102. According to an implementation mode of the present disclosure, the second storage unit 102 may be implemented as a volatile memory or a non-volatile memory. In particular, considering that the second storage unit 102 stores identity information and permission information of the plurality of modules 101-1 to 101-4 as key information, the second storage unit 102 may be implemented as, for example, a hardware register, and cannot be directly accessed by a plurality of modules 101-1 to 101-4, i.e. each of the plurality of modules 101-1 to 101-4 cannot execute a writing operation or a reading operation on the second storage unit 102.

According to an implementation mode of the present disclosure, the secondary storage unit 102 may be implemented as a hardware-based memory protection mechanism PKU (Protection Keys for Userspace).

PKU provides a mandatory page-table-based memory access control without modifying the page table. The working principle of PKU is to use 4 bits not previously used on the page table for providing 16 (=2⁴) secret keys. In addition, the present disclosure further provides a new user-accessible register PKRU (Protection Key permissions Register for User pages) that contains two separate registers for storing reading permission and writing permission for each secret key. It is necessary to additionally check the reading permission and writing permission when the page where the process corresponding to the secret key is located is accessed, so as to play a role in protecting the specified memory protection. In particular, as a hardware protection mechanism for internal storage, PKU can achieve thread-level with its protection granularity. According to an implementation mode of the present disclosure, the control unit 104 may communicationally connected to the first storage unit 102 and the second storage unit103 and the plurality of modules 101-1 to 101-4, and may control a reading operation and/or a writing operation of the plurality of modules 101-1 to 101-4 to the first storage unit 102 according to the identity information and the permission information stored in the second storage unit 103.

According to an implementation mode of the present disclosure, the control unit 104 may be implemented, for example, as a memory management unit (MMU). MMU is a kind of computer hardware responsible for processing the memory access request of CPU, and its functions include virtual address to physical address conversion, memory protection, central processor cache control, etc. Since the mechanism and principle of MMU are known to those skilled in the art, for the sake of brevity, the details thereof will not be described in more detail herein.

Next, an example of the operation of the system 100 will be described with reference to Fig. 2 with the example that the first storage unit 102 is a memory, the second storage unit 103 is PKRU, the control unit 104 is an MMU, and the plurality of modules 101-1 to 101-4 are threads executed by the CPU. However, those skilled in the art should recognize that the implementation modes of the present disclosure are not so limited. Those skilled in the art, in light of the teachings of the present disclosure, may conceive other implementation modes to implement a system for transmitting data between a plurality of modules.

As shown in Fig. 2, a module 101-1 of the plurality of modules 101-1 to 101-4 needs to write data to the first storage unit 102 to transmit data via the first storage unit 102, and thus sends a writing request for writing data to the first storage unit 102 to the control unit 104. For example, the module 101-1 may be a lidar sensor process executed by CPU for transmitting data acquired by a lidar sensor to an algorithm node for processing the data. For example, the module 101-3 may be a driving speed control process executed by CPU, and in the execution of its control algorithm, some nodes need to retrieve data written from the lidar sensor process.

Subsequently, the control unit 104 implemented as, for example, an MMU, verifies the identity of the module 101-1 according to the identity information of the module 101-1 stored in the second storage unit 103 implemented as, for example, PKRU, and determines whether to allow the module 101-1 to execute a writing operation on the first storage unit 102 implemented as, for example, an internal storage, according to the permission information of the module 101-1 stored in the second storage unit 103.

As an example, as described above, PKU provides a mandatory page-table-based memory access control without modifying the page table. The PKU provides 16 secret keys with 4 bits not previously used on the page table. The 16 secret keys can be assigned as identity information to 16 processes, such as a lidar sensor process, a camera sensor process, a driving speed control process, a driving direction control process, or a path decision process in an autonomous driving system. The numerical values of the 16 secret keys are fixed. Accordingly, a page created by a process holding a secret key will have the numerical value of the secret key. The numerical values of the 16 secret keys may be stored as the identity information of the process in a second storage unit 103 implemented as, for example, PKRU, and not accessible by the plurality of modules (e.g. processes) 101-1 to 101-4.

Further, a reading permission and a writing permission regarding processes corresponding to 16 secret keys respectively, are stored in the PKRU serving as the second storage unit 103. If the MMU serving as the control unit 104 encounters a page protected by the PKU when executing the translation between the virtual address and the physical address, it is necessary to query the PKRU to confirm the reading permission and the writing permission of the corresponding process. The PKRU comprises one 32-bit register, wherein the 32 bits comprise two bits corresponding to reading permission and writing permission of 16 secret keys (processes), respectively. For example, "00" indicates that it cannot be read or written by other processes, "01" indicates that it can be read by other processes but cannot be written by other processes, "10" indicates that it can be written by other processes but cannot be read by other processes, and "11" indicates that it can be read or written by other processes. For example, the permission information corresponding to the module 101-1 stored in the PKRU may be "01", indicating that the data written by the module 101-1 (e.g. lidar sensor process) into the first storage unit 102 may be read by other processes but cannot be written by other processes.

Specifically, prior to the establishment of the shared memory communication channel of the algorithm node, the writing permission of the PKU is opened by the PKU authorization for the process requesting data to be written to the shared memory, and the writing permission is closed after the completion of the data writing. The specific procedure authorized by PKU is as follows: when a writing process accesses a critical memory page protected by PKU, a page fault is triggered by the MMU, thereby triggering the check of the location of the PKU, and whether the writing process is allowed to write to a corresponding shared memory page can be determined by checking a secret key and the permission stored in a PKRU register.

Page fault is essentially caused by the inability of a memory address to be translated, requiring the intervention of an abnormality handling mechanism to recover. The reason for page fault may be that there is no permission regarding the memory address to be accessed (e.g. a low-permission user attempting to access an address held by a high-permission user), the accessed memory address has not been read from the physical page (e.g. the read physical page being triggered by missing page abnormality), etc. In fact, PKU may be viewed as a page fault due to no permission that causes a process attempting to access a critical address to be forced to trigger page fault so that verification can be a necessity before any process actually contacts the critical address.

In summary, according to an implementation mode of the present disclosure, the protection against access permission to shared memory can be provided from a hardware level, thereby achieving the technical effect of preventing malicious tampering with memory data.

Subsequently, according to an implementation mode of the present disclosure, in response to the control unit 104, e.g. MMU, determining that the module 101-1 is allowed to execute a writing operation on the first storage unit 102 and there are no other modules that are executing a writing operation on the first storage unit 102, the module 101-1 writes data to the first storage unit 102.

According to an implementation mode of the present disclosure, when the module 101-1 completes a writing operation on the first storage unit 102, the control unit 102 is notified that the writing operation is completed. For example, after a sensor process completes writing data to the shared memory, the PKU closes the writing permission of the sensor process.

Further, as shown in Fig. 2, the module 101-3 can read data written by the module 101-1 from the first storage unit 102. For example, the module 101-3 may be a driving speed control process executed by CPU, and in the execution of its control algorithm, some nodes need to retrieve data written by module 101-1 from, for example, a sensor process.

Specifically, the module 101-3 sends a reading request to read the first storage unit 102 to the control unit 104, and the control unit 104 verifies the identity of the module 101-3 according to the identity information of the module 101-3 stored in the second storage unit 103 and determines whether to allow the module 101-3 to execute a reading operation on the first storage unit 102 according to the permission information of the module 101-3 stored in the second storage unit 103. The procedure of verifying the module 101-3 based on the identity information and permission information stored in the second storage unit 103 is similar to the procedure of verifying the module 101-1 described above, with the difference only that the module 101-1 has a writing permission and the module 101-3 only has a read permission. Therefore, for the sake of brevity, the verification procedure of the module 101-3 will not be described repeatedly herein.

According to an implementation mode of the present disclosure, in response to the control unit 104 determining that the module 101-3 is allowed to execute a reading operation to the first storage unit 102 and there are no other modules that are executing a writing operation on the first storage unit 102, the module 101-3 reads data from the first storage unit.

According to an implementation mode of the present disclosure, permission isolation of writing modules 101-1 and 101-2 and reading modules 101-3 and 101-4 from each other may also be achieved by a logical code mechanism such as read-write lock or Ring Buffer. A read-write lock is an interface to a locking mechanism provided by an operating system that typically determines whether a read-write lock is available through one globally accessible value, e.g. the value of "0" indicating that a read-write lock is available, and a value greater than "0" indicating that the read-write lock is being used by other processes. Specifically, whether a read-write lock is available may be determined by attempting to acquire the same. When the read-write lock is unavailable, the process will wait to acquire the read-write lock.

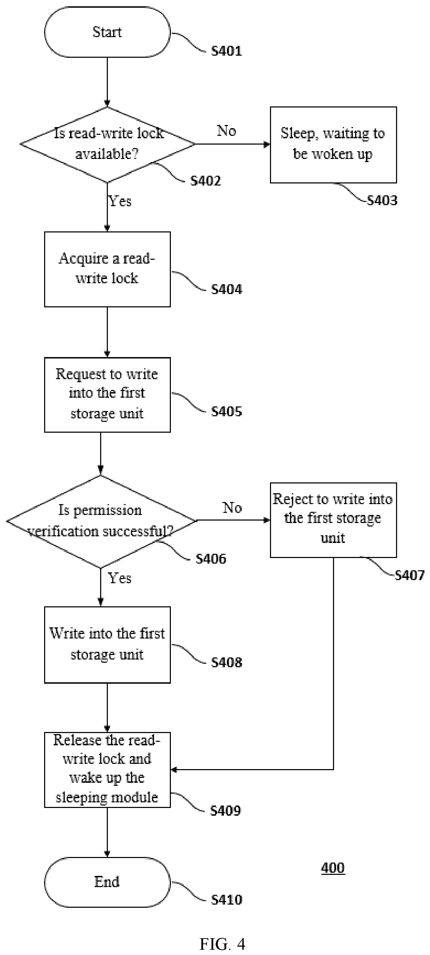

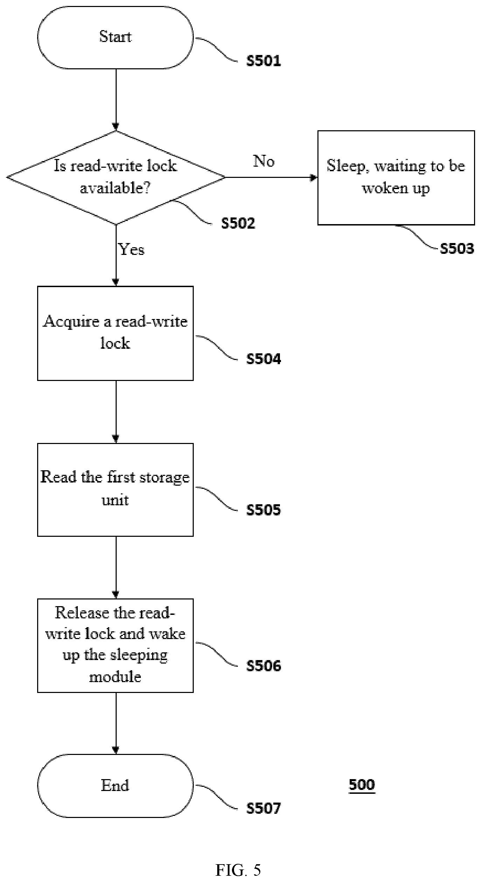

In addition, the ring buffer is formed by connecting the caches end-to-end, so there is no head and tail concept in the ring buffer, i.e. writing can be performed sequentially from any position of the ring buffer, and the reading operation and writing operation can be realized only by executing an operation on a cache unit to acquire a position which should be currently written, thereby realizing memory access without locking. Based on the mechanism and principle of a read-write lock and a ring buffer, a person skilled in the art could voluntarily set an implementation mode of permission isolation between a writing module and a reading module according to the teachings of the present disclosure, which is not limited by the present disclosure. According to an implementation mode of the present disclosure, to improve the efficiency, the first storage unit 102 implemented as, for example, shared memory, may be protected in a hierarchical manner, wherein the first hierarchy isolates reading permission and writing permission of reading module and writing module by using, for example, a read-write lock, and the second hierarchy protects writing permission management between writing modules by using, for example, PKU. This will be described in more detail below in connection with Figs. 4 and 5.

With the hierarchical protection manner described above, according to an implementation mode of the present disclosure, when the module 101-2 (also referred to herein as a "third module ") is executing a writing operation on the first storage unit 102, the control unit 104 does not allow the writing operation executed by the module 101-1 on the first storage unit 101 and the reading operation executed by the module 101-3 and module 101-4 on the first storage unit 102, until the writing operation of the module 101-2 is completed.

Further, according to an implementation mode of the present disclosure, a reading operation and/or a writing operation of the first storage unit 102 by each of the plurality of modules 101-1 to 101-4 may have a corresponding priority, and the control unit 104 may order the time sequence of the reading operation and/or the writing operation of the first storage unit 102 by the plurality of modules 101-1 to 101-4 according to the priorities.

For example, in a scenario of an autonomous driving system, different threads may have different importances in the autonomous driving system, and some data is critical and must respond immediately. For example, when the camera sensor or lidar sensor senses a pedestrian or obstacle suddenly appearing on a driving route, the sensed data of the camera sensor process or lidar sensor process should be written to the shared memory with the highest priority. Accordingly, the priority of the operation of the driving speed control process to read the sensed data should also be the highest.

Accordingly, according to an implementation mode of the present disclosure, the second storage unit 103 may be configured to store priorities of reading operations and/or writing operations of a plurality of modules 101-1 to 101-4 to the first storage unit 102, and the control unit 104 may order the temporal order of the reading operations and/or writing operations of the a plurality of modules 101-1 to 101-4 to the first storage unit 102 according to the priorities.

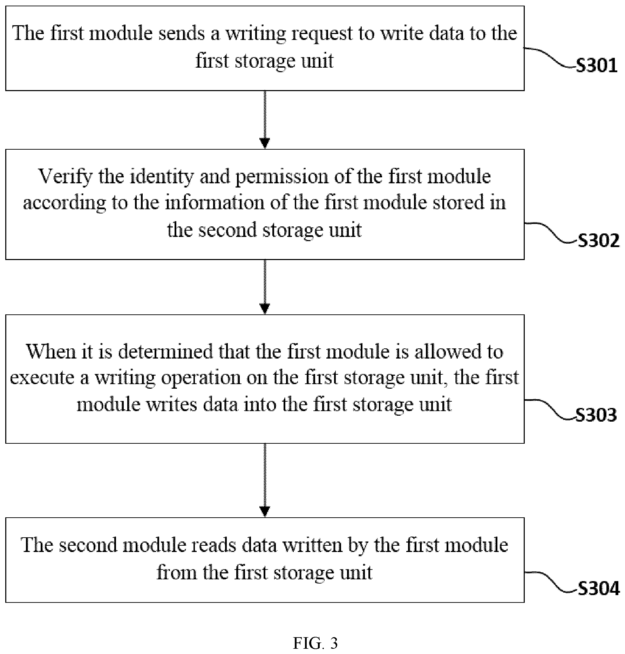

Fig. 3 shows a flowchart illustrating a method 300 for transmitting data between a plurality of modules according to an implementation mode of the present disclosure.

According to an implementation mode of the present disclosure, the method 300 may include:
step S301: a first module of the plurality of modules sending a writing request to write data to the first storage unit, wherein the first storage unit is used to store the data to-be-transmitted between the plurality of modules;
step S302: a control unit verifying the identity of the first module according to the identity information of the first module stored in the second storage unit, and determining whether the first module is allowed to execute a writing operation on the first storage unit according to the permission information of the first module stored in the second storage unit, wherein the second storage unit is configured for storing identity information of the plurality of modules and permission information of a reading operation and/or a writing operation of the plurality of modules on the first storage unit;
step S303: the first module writing the data to the first storage unit if it is determined that the first module is allowed to execute a writing operation on the first storage unit and there are no other modules that are executing a writing operation on the first storage unit, and
step S304: a second module of the plurality of modules reading the data written by the first module from the first storage unit.

According to an implementation mode of the present disclosure, the processing in step S301 to step S304 may be implemented by, for example, the system 100 described above with reference to Figs. 1 and 2. Therefore, the details will not be repeated herein.

Fig. 4 is a flowchart illustrating an example of a method 400 for writing into a shared memory according to an implementation mode of the present disclosure.

According to an implementation mode of the present disclosure, as shown in Fig. 4, the method 400 begins at step S401. Subsequently, in step S402, the writing module (e.g. module 101-1 implemented as a lidar sensor process as described above) checks whether a read-write lock corresponding to the first storage unit (e.g. the first storage unit 102 implemented as shared memory as described above) to be written into is available. When the read-write lock is unavailable ("NO" in step S402), the writing module sleeps, waiting to be woken up in step S403. When the read-write lock is available ("YES" in step S402), the writing module acquires the read-write lock in step S404. Subsequently, in step S405, the writing module requests writing into the first storage unit. According to an implementation mode of the present disclosure, when a writing request of the writing module arrives at the control module (e.g. control module 104 implemented as MMU described above), in step S406 it is verified whether the writing module has the permission to write into the first storage unit (e.g. checking whether it has a PKU authorization described above) (e.g. by triggering page fault) based on identity information and permission information stored in the second storage unit (e.g. the second storage unit 103 implemented as PKRU described above). When the writing module does not have the writing permission ("NO" in step S406), the writing operation of the writing module to the first storage unit is rejected in step S407, and the method 400 proceeds to step S409. When the writing module has a writing permission ("YES" in step S406), the writing module writes data into the first storage unit in step S408. Subsequently, in step S409, after completing the writing operation, the writing module releases the read-write lock. Further, in step S409, if there are other writing modules waiting to be woken up, other writing modules are woken up. Finally, the method 400 ends at step S410.

According to an implementation mode of the present disclosure, since a writing module has a writing permission to write into the first storage unit (e.g. shared memory), there is a possibility that data stored in the first storage unit is maliciously damaged between the writing modules. On the basis of a first-level protection using a read-write lock to achieve isolation, a second-level protection is further used, namely, a second storage unit, for example, implemented as PKRU, is used to manage the writing permission of the writing module, so that critical data in the first storage unit cannot be tampered with or damaged by other malicious modules that may exist. Therefore, the security of the overall data transmission is improved.

Fig. 5 is a flowchart illustrating an example of a method 500 for reading a shared memory according to an implementation mode of the present disclosure.

According to an implementation mode of the present disclosure, as shown in Fig. 5, the method 500 begins at step S501. Subsequently, in step S502, the reading module (e.g. the module 101-3 implemented as the driving speed control process described above) checks whether a read-write lock corresponding to the first storage unit to be read (e.g. the first storage unit 102 implemented as the shared memory described above) is available. When the read-write lock is unavailable ("NO" in step S502), the reading module sleeps, waiting to be woken up in step S503. When the read-write lock is available ("YES" in step S502), the reading module acquires the read-write lock in step S504. Subsequently, in step S505, the reading module reads the data stored in the first storage unit. Subsequently, in step S506, after the reading operation is completed, the reading module releases the read-write lock. Further, in step 506, if there are other reading modules waiting to be woken up, other reading modules are woken up. Finally, the method 500 ends at step S507.

According to an implementation mode of the present disclosure, since the reading module does not have a writing permission to write into the first storage unit (e.g. shared memory), and does not have the possibility of destroying the data stored in the first storage unit, according to the implementation mode of the present disclosure, when the reading module executes a reading operation on the first storage unit, only a first-level protection can be used, namely, the isolation is achieved by using a read-write lock, thereby improving reading efficiency.

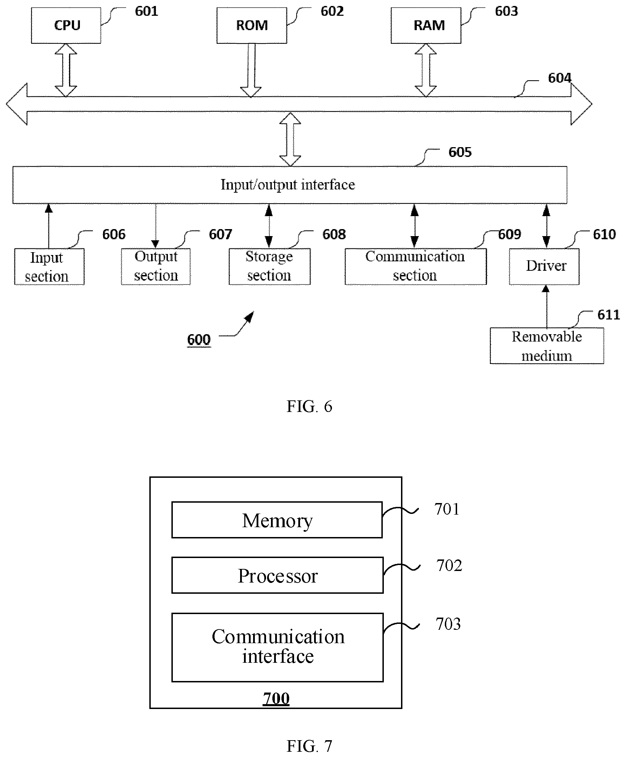

Fig. 6 is a simplified structural diagram illustrating a general-purpose machine 600 that may be used to implement a system 100 and a method 300 for transmitting data between a plurality of modules according to an implementation mode of the present disclosure. The general-purpose machine 600 may be, for example, a computer system or a computing device. It should be noted that the general-purpose machine 600 is only one example and does not imply any limitation as to the scope of use or functionality of the system and method of the disclosure. Nor should the general-purpose machine 600 be interpreted as having any dependency or requirement relating to any one assembly or a combination thereof illustrated in the above system or method.

In Fig. 6, a central processing unit (CPU) 601 executes various processes according to a program stored in a read-only memory (ROM) 602 or a program loaded from a storage section 608 to a random access memory (RAM) 603. In the RAM 603, the data required when the CPU 601 executes various processes and the like is also stored as needed. The CPU 601, the ROM 602, and the RAM 603 are connected to each other via a bus 604. An input/output interface 605 is also connected to the bus 604.

The following components are also connected to the input/output interface 605: an input section 606 (including a keyboard, a mouse, etc.), an output section 607 (including a display such as a Cathode Ray Tube (CRT), a liquid crystal display (LCD), etc. a speaker, etc.), a storage section 608 (including a hard disk, etc.), and a communication section 609 (including a network interface card such as a LAN card, a modem, etc.). The communication section 609 executes communication processing via a network such as the Internet. A driver 610 may also be connected to the input/output interface 605 as desired. A removable medium 611 such as a magnetic disk, an optical disk, a magnetooptical disk, a semiconductor memory, etc. may be mounted to the driver 610 as desired so that a computer program read therefrom may be mounted into the storage section 608 as desired.

In the case where the above series of processes are implemented by software, the program constituting the software may be mounted from a network such as the Internet or from a storage medium such as the removable medium 611.

Those skilled in the art should understand that this storage medium is not limited to the removable medium 611 shown in Fig. 6. The removable medium 611 stores a program and the removable medium 611 is distributed separately from the equipment to provide a program to a user. Examples of the removable medium 611 include a magnetic disk (including a floppy disk), an optical disk (including a CD-ROM and a DVD), a magnetooptical disk (including a mini disk (MD) (registered trademark)), and a semiconductor memory. Alternatively, the storage medium may be ROM 602, a hard disk contained in the storage section 608, or the like, in which a program is stored and distributed to a user together with the equipment containing the program.

Further, the present disclosure provides a program product storing a machine-readable instruction code. The instruction code, when read and executed by a machine, may execute the data processing method according to the present disclosure described above. Accordingly, the various storage media listed above for carrying such a program product are also included within the scope of the present disclosure.

In addition, an embodiment of the present disclosure further provides a computing device 700 as shown in Fig. 7, including a memory 701 and one or more processors 702 in communication connection with the memory. The memory 701 stores an instruction which may be executed by the one or more processors 702, and the instruction is executed by the one or more processors 702, so that the one or more processors 702 implement the method for transmitting data between a plurality of modules as mentioned above. The computing device 700 may further comprise a communication interface 703 which may implement one or more communication protocols (LTE, Wi-Fi, etc.).

The above has been described in detail through block diagrams, flow charts, and/or implementation modes, clarifying specific implementation modes of a system and/or a method according to the implementation modes of the present disclosure. When such block diagrams, flowcharts, and/or implementation modes include one or more functions and/or operations, those skilled in the art will understand that each function and/or operation in such block diagrams, flowcharts, and/or implementation modes may be implemented individually and/or collectively by various hardware, software, firmware, or virtually any combination thereof. In an implementation mode, several portions of the subject matter described in the description may be implemented in an application-specific integrated circuit (ASIC), field programmable gate array (FPGA), digital signal processor (DSP), or other integrated forms. However, those skilled in the art will recognize that some aspects of the implementation modes described in the description can be equivalently implemented, in whole or in part, in the form of one or more computer programs running on one or more computers (e.g. in the form of one or more computer programs running on one or more computer systems), in the form of one or more programs running on one or more processors (e.g. in the form of one or more programs running on one or more microprocessors), in the form of a firmware, or in substantially any combination thereof. Moreover, according to the content disclosed in the description, designing circuits for use in this disclosure and/or writing codes for software and/or firmware for use in this disclosure is entirely within the competence of those skilled in the art.

According to the technology disclosed in the present disclosure for transmitting data between a plurality of modules, the security of shared memory configured for, for example, an autonomous driving system is protected by combining software and hardware. That is, on the basis of the traditional isolation of reading operation and writing operation through software logic, the security of writing into a shared memory is further ensured through a hardware mechanism so as to prevent key data in the shared memory from being tampered with, thereby improving the security of data transmission.

Those skilled in the art should recognize that although the system and method for transmitting data between a plurality of modules according to the implementation mode of the present disclosure are described herein with an autonomous driving system as an example, the present disclosure is not limited to this. The technology for transmitting data between a plurality of modules according to the present disclosure can also be applied to other scenarios for transmitting data through shared memory, such as robot control system, financial trading system, and the like, all of which should be covered within the scope of the present disclosure.

Although the present disclosure has been disclosed above through the description of specific implementation modes of the present disclosure, it should be understood that various modifications, improvements, or equivalents thereof may be designed by those skilled in the art within the scope of the appended claims. Such modifications, improvements, or equivalents should also be considered to be within the scope of the present disclosure.

The present disclosure also includes, but is not limited to, the following technical solutions:
solution 1, a method for transmitting data between a plurality of modules, the method including:
a first module of the plurality of modules sending a writing request to write data into a first storage unit, wherein the first storage unit is configured for storing data to-be-transmitted between a plurality of modules;
verifying the identity of the first module according to the identity information of the first module stored in a second storage unit, and determining whether to allow the first module to execute a writing operation on the first storage unit according to the permission information of the first module stored in the second storage unit, wherein the second storage unit is configured for storing identity information of a plurality of modules and permission information of a reading operation and/or a writing operation of a plurality of modules on the first storage unit;
the first module writing the data to the first storage unit if it is determined that the first module is allowed to execute writing operation on the first storage unit and there are no other modules that are executing writing operation on the first storage unit, and
a second module of the plurality of modules reading the data written by the first module from the first storage unit;
solution 2, the method according to solution 1, wherein the plurality of modules cannot read and write to the second storage unit;
solution 3, the method according to solution 1 or 2, wherein the first storage unit is composed of a memory, and the second storage unit is composed of a register;
solution 4, the method according to any one of solutions 1 to 3, further including:
when the first module completes a writing operation on the first storage unit, notifying a control unit that its writing operation is completed;
wherein the control unit is connected to the first storage unit and the second storage unit and a plurality of modules, and controls the reading operation and/or writing operation of a plurality of modules to the first storage unit according to identity information and permission information stored in the second storage unit;
solution 5, the method according to any one of solutions 1 to 4, further including:
the second module sending a reading request for reading the first storage unit to the control unit;
verifying the identity of the second module according to the identity information of the second module stored in the second storage unit, and determining whether to allow the second module to execute the reading operation on the first storage unit according to the permission information of the second module stored in the second storage unit, and
the second module reading data from the first storage unit in the case where it is determined that the second module is allowed to execute the reading operation on the first storage unit and there are no other modules that are executing writing operation on the first storage unit;
solution 6, the method according to solution 5, wherein the number of second modules is at least two;
solution 7, the method according to any one of solutions 1 to 6, wherein the plurality of modules further comprise a third module, and wherein
when the third module is executing a writing operation on the first storage unit, the writing operation executed by the first module on the first storage unit and the reading operation executed by the second module on the first storage unit are not allowed until the writing operation of the third module is completed;
solution 8, the method according to any one of solutions 1 to 7, wherein the reading operation and/or writing operation of each of the plurality of modules to the first storage unit has a corresponding priority, and
the method further comprises: ordering a time sequence of reading operations and/or writing operations of the plurality of modules to the first storage unit according to the priorities;
solution 9, the method according to any one of solutions 1 to 8, wherein the second storage unit is further configured to store the priorities of reading operations and/or writing operations of the plurality of modules to the first storage unit;
solution 10, the method according to any one of solutions 1 to 9, wherein the method is for transmitting data between a lidar module, a camera module, a driving speed control module, a driving direction control module, and a path decision module included in an autonomous driving system; and
solution 11, an electronic device including a processor, and a memory having a program stored thereon which, when executed by the processor, causes the processor to execute the method according to any one of solutions 1 to 10.

## Claims

1. A system for transmitting data between a plurality of modules, the system comprising:
a first storage unit configured to store data to-be-transmitted between the plurality of modules;
a second storage unit configured to store identity information of the plurality of modules and permission information of at least one of a reading operation or a writing operation of the plurality of modules on the first storage unit; and
a control unit communicationally connected to the first storage unit and the second storage unit and the plurality of modules, and configured to control at least one of the reading operation or the writing operation of the a plurality of modules on the first storage unit according to the identity information and the permission information stored in the second storage unit,
wherein the plurality of modules are configured to transmit data by executing at least one of the writing operation or the reading operation on the first storage unit under a control of the control unit.

2. The system according to claim 1, wherein the second storage unit is configured to be forbidden to be read and written by the plurality of modules.

3. The system according to claim 1, wherein the first storage unit comprises a memory and the second storage unit comprises a register.

4. The system according to claim 1, wherein the plurality of modules comprise a first module, and wherein
the first module is configured to send a writing request for writing data into the first storage unit to the control unit,
the control unit is configured to verifie an identity of the first module according to the identity information of the first module stored in the second storage unit, and determine whether to allow the first module to execute writing operation on the first storage unit according to the permission information of the first module stored in the second storage unit, and
in response to the control unit determining that the first module is allowed to execute the writing operation on the first storage unit and there are no other modules that are executing the writing operation on the first storage unit, the first module is configured to write data into the first storage unit.

5. The system according to claim 4, wherein the first module is configured to notify the control unit that the writing operation by the first module has been completed when the first module has completed the writing operation on the first storage unit.

6. The system according to claim 1, wherein the plurality of modules comprise a second module, and wherein
the second module is configured to send a reading request for reading data from the first storage unit to the control unit;
the control unit is configured to verifie an identity of the second module according to the identity information of the second module stored in the second storage unit, and determines whether to allow the second module to execute the reading operation on the first storage unit according to the permission information of the second module stored in the second storage unit, and
the second module is configured to read data from the first storage unit in response to the control unit determining that the second module is allowed to execute the reading operation on the first storage unit and there are no other modules that are executing the writing operation on the first storage unit.

7. The system according to claim 6, wherein a number of the second modules is at least two.

8. The system according to any one of claim 4 to claim 6, wherein:
the plurality of modules further comprise a third module, and
the control unit is configured to forbid the writing operation executed by the first module on the first storage unit and the reading operation executed by the second module on the first storage unit when the third module is executing the writing operation on the first storage unit.

9. The system according to any one of claims 1-8, wherein:
the reading operation and writing operation of each of the plurality of modules on the first storage unit has a corresponding priority, and
the control unit is configured to determine a time sequence of at least one of reading operations or writing operations of the a plurality of modules on the first storage unit according to the priorities.

10. The system according to any one of claims 1-9, wherein the second storage unit is further configured to store priorities of at least one of reading operations or writing operations of the plurality of modules on the first storage unit, and
the control unit is configured to determine a time sequence of at least one of reading operations or writing operations of the plurality of modules on the first storage unit according to the priorities.

11. The system according to any one of claims 1-10, wherein:
the system is an autonomous driving system, and
the plurality of modules comprise at least one of a lidar module, a camera module, a driving speed control module, a driving direction control module, and a path decision module.

12. A method for transmitting data between a plurality of modules, the method comprising:
sending, by a first module of the plurality of modules a writing request to write data into a first storage unit, wherein the first storage unit is configured for storing data to-be-transmitted between the plurality of modules;
verifying, by a control unit, an identity of the first module according to identity information of the first module stored in a second storage unit, and determining whether to allow the first module to execute a writing operation on the first storage unit according to permission information of the first module stored in the second storage unit, wherein the second storage unit is configured for storing identity information of the plurality of modules and permission information of at least one of a reading operation or a writing operation of the plurality of modules on the first storage unit; and
writing, by the first module, the data to the first storage unit in response to the first module being allowed to execute writing operation on the first storage unit and there being no other modules that are executing writing operation on the first storage unit.

13. The method accordign to claim 12, further comprising:
reading, by a second module of the plurality of modules, the data written by the first module from the first storage unit.

14. A computer-readable storage medium having a program stored thereon, the program comprising an instruction that, when executed by one or more processors of a computing device, causes the computing device to execute a method according to claim 12 or 13.

15. A computing device, comprising:
a processor, a memory, and a computer program stored on the memory and executable on the processor;
wherein the processor, when executing the computer program, performs a method according to claim 12 or 13.
